Europäisches Patentamt

(19) European Patent Office

Office européen des brevets

(11) **EP 0 774 871 A2**

## (12) EUROPEAN PATENT APPLICATION

(43) Date of publication:
21.05.1997 Bulletin 1997/21

(51) Int. Cl.⁶: **H04N 9/31**

(21) Application number: 96118458.7

(22) Date of filing: 18.11.1996

(84) Designated Contracting States:
**DE FR GB**

(30) Priority: **17.11.1995 JP 299520/95**

(71) Applicant: **NEC CORPORATION**
**Tokyo (JP)**

(72) Inventors:
• **Kouyama, Toshitake**
**Minato-ku, Tokyo (JP)**
• **Mihara, Tomohiro**
**Minato-ku, Tokyo (JP)**

(74) Representative: **VOSSIUS & PARTNER**
**Siebertstrasse 4**
**81675 München (DE)**

(54) **Projector equipped with corrector circuit for color phase irregularities and brightness irregularities**

(57) A projector free from color phase irregularities and brightness irregularities on images which are displayed on a screen through separation and synthesis of the primary colors of light. An address-generating circuit 15 generates an address signal which corresponds to the correction point for a color phase irregularity on the screen on which an image is displayed. A color-phase-irregularity correction data memory 11R stores a correction value for the correction point, corresponding to the address signal. The correction value stored in the memory is read out on the basis of the address signal. The level of the picture signal is corrected on the basis of the read correction value, and fresh light of the primary colors is projected for display after their separation and synthesis. For correction of the level of a picture signal, interpolation data is produced from a plurality of correction values by a pedestal-level-control voltage generator circuit 9R and a gain-control voltage generator circuit 10R. This allows correction of both the pedestal level and the gain.

Fig. 1

## Description

The present invention relates to a projector equipped with a corrector circuit for color phase irregularities and brightness irregularities, and more particularly to a projector equipped with a corrector circuit for color phase irregularities and brightness irregularities, designed to project a magnified image of a video or computer image onto a 35-200" oversize screen.

Liquid crystal projectors usually have variations in the gap thicknesses of the liquid crystal cells of the respective liquid crystal modules for red, green and blue (hereunder referred to as R, G and B, respectively) and the unevenness in the same panel, and this causes R, G and B to have different levels of contrast, thus producing color phase irregularities and brightness irregularities on an image displayed by transmittance and synthesis of three liquid crystal modules for R, G and B.

Techniques hitherto known for preventing such a inconvenience include the technique described in Japanese Unexamined Patent Application Disclosure HEI 05-196913 (hereunder referred to as the prior art), for example.

The prior art technique is equipped with a cursor-generating circuit which outputs a signal designating a correction point for a color phase irregularity on the screen, horizontal and vertical address circuits for producing an address signal designating the address of the designated correction point, a correcting device which issues a correction value for correcting the color phase irregularity at the correction point, a CPU which controls the writing and reading of the correction value corresponding to the address signal to and from a frame memory, and a picture signal corrector circuit for correcting the level of the picture signal on the basis of the correction value read from the frame memory.

The liquid crystal projector according to the prior art mentioned above, however, must have the cursor-generating circuit which outputs a signal designating the correction point at which a color phase irregularity on the screen is to be corrected, and means for storing the correction value in the frame memory.

Assuming that the correction points are present all over the screen, however, the number of correction points theoretically totals 1,280 x 1,024 = 1,310,720 for each of the R, G and B liquid crystal panels each having 1,280 (horizontal) x 1,024 (vertical) pixels, for example, and this means that the storage capacity of the frame memory in and from which all the correction values for R, G and B are stored and read must be as great as 1,310,720 x 3 x (bits of the correction value data: e.g., 8 bits).

Although actual patterns of the color phase irregularities produced are rather loose and change slowly as compared with the number of pixels of the liquid crystal panels, the prior art technique needs a greatly increased number of correction points (adjustment points), and thus has the problem of a lengthy adjustment operation and other complicated operations for eliminating color phase irregularities.

It is an object of the present invention to provide a projector which easily eliminates the color phase irregularities and the brightness irregularities.

According to the present invention, there is provided a projector for displaying an image on a screen through separation and synthesis of the primary colors of light, equipped with a corrector circuit for color phase irregularities and brightness irregularities, which comprises: address signal-producing means for producing an address signal corresponding to the correction point for a color phase irregularity on the screen for displaying the image; a memory which stores the correction value for the correction point, corresponding to the address signal; readout means for reading out the correction value stored in the memory, on the basis of the address signal; and correcting means for correcting the color phase irregularity through correction of the level of the picture signal, on the basis of the read correction value.

The present invention also provides a projector for displaying an image on a screen through separation and synthesis of the primary colors of light, equipped with a corrector circuit for color phase irregularities and brightness irregularities, which comprises: address signal-producing means for producing an address signal corresponding to the correction point for a color phase irregularity on the screen for displaying the image; a memory which stores the correction value for the correction point, corresponding to the address signal; readout means for reading out the correction value stored in the memory, on the basis of the address signal; interpolating means for producing interpolation data from a plurality of correction values read out from the memory; and correcting means for correcting the color phase irregularity through correction of the level of the picture signal on the basis of the correction value read out from the memory and the interpolation value obtained from the interpolating means.

The projectors may each be designed to be equipped with modifying means for producing a modified address signal by modifying the order of the address signals along the scanning direction for displaying the image so that the readout means reads out the correction value stored in the memory, depending on the modified address signal. The correcting means corrects the pedestal level and the picture gain of the picture signal. The interpolation means is equipped with at least a weighting-factor generator, a multiplier, an adder and an LPF.

Fig. 1 is an illustration of a projector according to the present invention;

Fig. 2 is an illustration of the details of the H-PLL circuit, address-generating circuit, R-circuit color-phase-irregularity correction data memory and gain-control voltage generator circuit shown in Fig. 1;

Fig. 3 is an illustration of the details of a pedestal-level-control voltage generator circuit;

Fig. 4 is an illustration of the relationship between the addresses of measurement points and the respective color correction data; and

Fig. 5 is an illustration of the linear interpolation used for calculating the color correction data for points other than the measurement points.

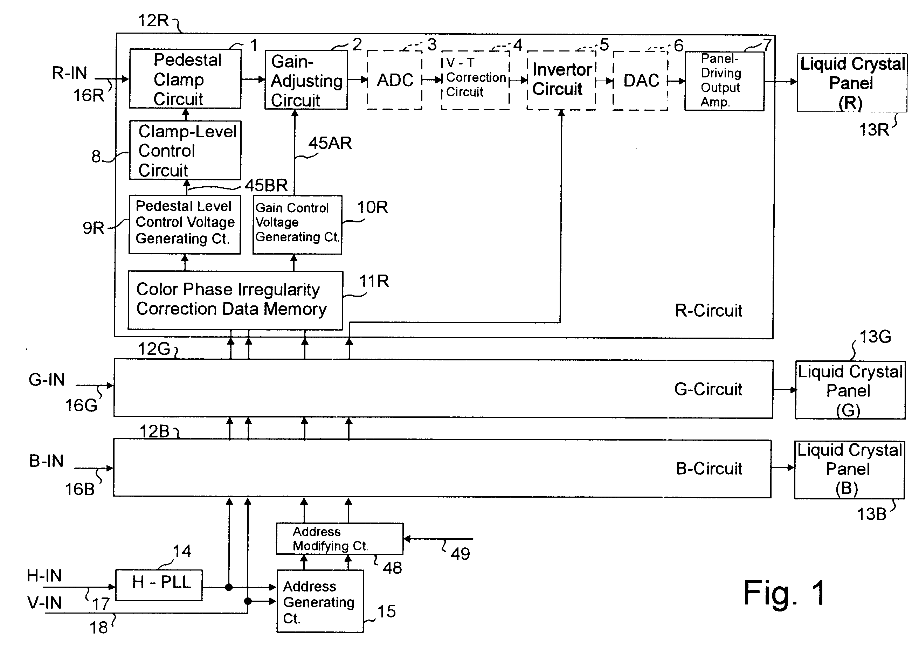

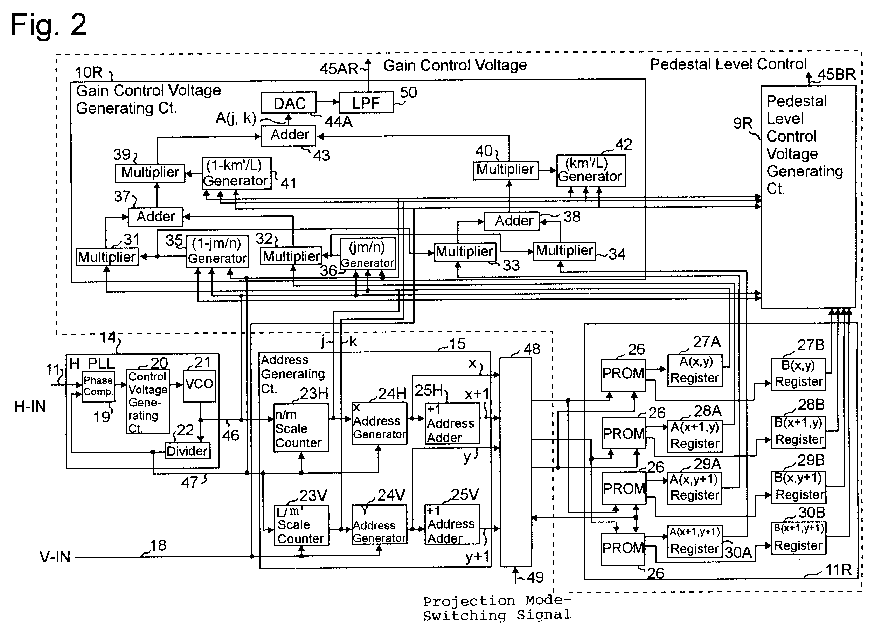

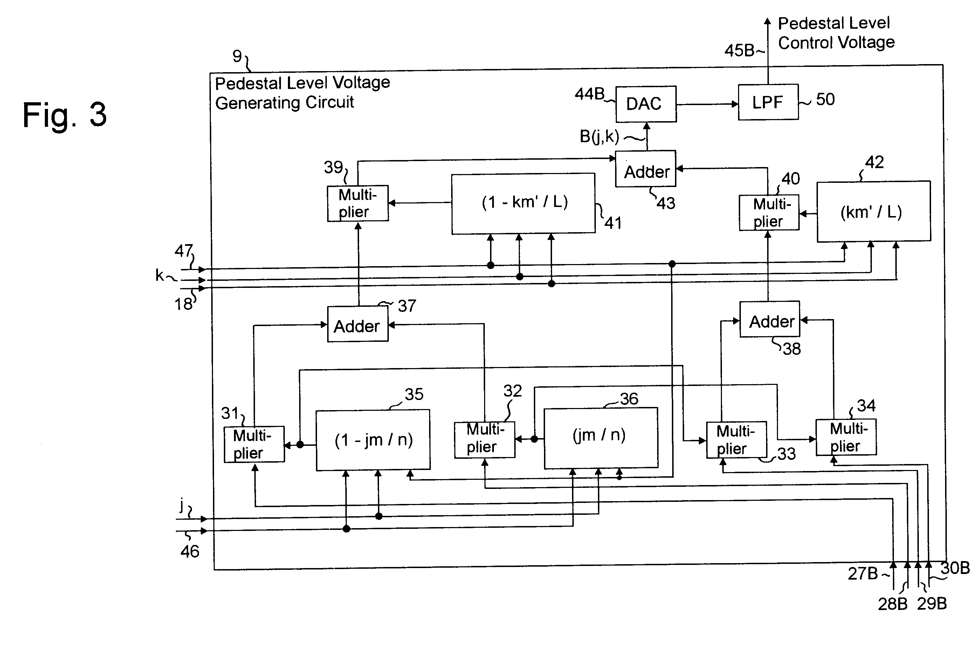

The present invention will now be described with reference to the drawings. Fig. 1 is a schematic diagram of a projector according to the present invention. Fig. 2 shows the details of the H-PLL circuit 14, address-generating circuit 15, R-circuit gain-control voltage generator circuit 10R and color-phase-irregularity correction data memory 11R shown in Fig. 1. In addition, Fig. 3 shows the details of the pedestal-level-control voltage generator circuit 9R shown in Fig. 1 (and Fig. 2).

Referring to Fig. 1, the shown projector is equipped with an R circuit 12R, a G circuit 12G and a B circuit 12B, with liquid crystal panels (R) 13R, (G) 13G and (B) 13B connected to the R circuit 12R, G circuit 12G and B circuit 12B, respectively. For example, R-IN signal 16R, G-IN signal 16G and B-IN signal 16B are given to the R circuit 12R, G circuit 12G and B circuit 12B from a computer (not shown).

An address-generating circuit 15 is connected to the R circuit 12R, G circuit 12G and B circuit 12B via an address-modifying circuit 49. H-IN signal 17, for example, is given to the shown H-PLL circuit 14 from a computer (not shown).

The output from the H-PLL circuit 14 is given to the address-generating circuit 15, and to the R circuit 12R, G circuit 12G and B circuit 12B as well, while V-IN signal 18 from a computer is given to the address-generating circuit 15, and the R circuit 12R, G circuit 12G and B circuit 12B as well.

Attention is now focused on the R circuit 12R. The R circuit 12R is equipped with a pedestal clamp circuit 1, a gain-adjusting circuit 2, an A/D converter (ADC) 3, a V-T corrector circuit 4, an inverter circuit 5, a D/A converter (DAC) 6 and a panel-driving output amplifier 7, the R-IN signal 16R is given to the pedestal clamp circuit 1, and the panel-driving output amplifier 7 is connected to the liquid crystal panel (R) 13R.

The R circuit 12R is further equipped with a clamp-level control circuit 8, a pedestal-level-control voltage generator circuit 9R, a gain-control voltage generator circuit 10R and a color-phase- irregularity correction data memory 11R. The pedestal-level-control voltage generator circuit 9R generates a pedestal-level control voltage, depending on the correction data read from the color-phase-irregularity correction data memory 11R, and the clamp-level control circuit 8 in turn controls the pedestal clamp circuit 1 on the basis of the pedestal-level control voltage. Likewise, the gain-control voltage generator circuit 10R gives a gain control voltage to the gain-adjusting circuit 2, corresponding to the correction data read front the color-phase-irregularity correction data memory 11R.

Here, it is to be noted that the G circuit 12G and B circuit 12B are configured in the same manner as the R circuit 12R.

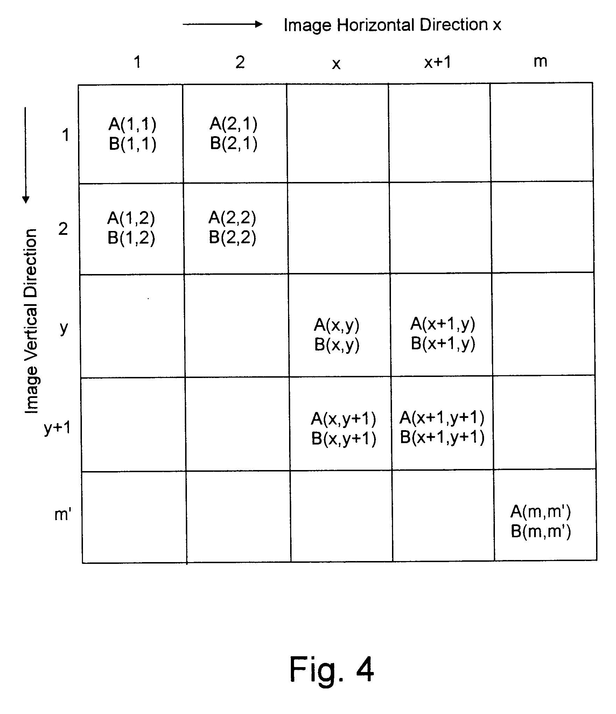

Taking a liquid crystal projector as an example of the projector, an explanation will now be given regarding a method of calculating color correction data for points other than the measurement points by linear interpolation. Assume that the number of the horizontal pixels of a liquid crystal panel is n (e.g., n = 1,280). Assume that the number of the vertical pixels of the liquid crystal panel is L (e.g., L = 1,024). The entire projection screen is horizontally divided into m blocks (e.g., m = 16). The entire projection screen is vertically divided into m' blocks (e.g., m' = 16). Here, when the contrast (gain) correction coefficient data is represented by A, and the brightness (pedestal level) correction data by B, the correction data (contrast correction data A and brightness correction data B) for the respective colors obtained by measurement at the m and the m' points along the width and the length of the projection screen, respectively, are expressed as illustrated in Fig. 4 using addresses (x, y) of the measurement points. Here, the number of the horizontal pixels in one block is n/m (e.g., n/m = 1,280/16 = 80), and the number of the vertical pixels is L/m' (e.g., L/m' = 1,024/16 = 64).

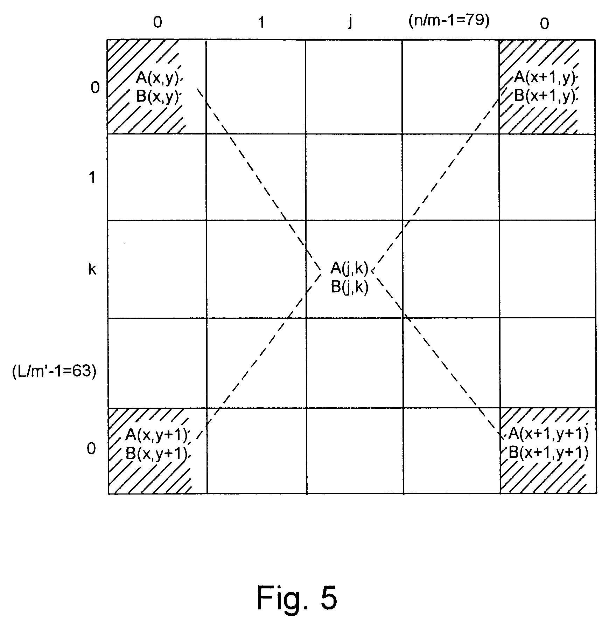

In addition, the color correction data for points other than the measurement points may be calculated by the linear interpolation illustrated in Fig. 5, from the color correction data obtained by the measurement. Here,

$$A(j, k) = \{A(x, y) \times (1-j/(n/m)) + A(x+1, y) \times (j/(n/m)\} \times (1-k/(L/m')) + \{A(x, y+1) \times (1-j/(n/m)) + A(x+1,y+1) \times (j/(n/m)\} \times (k/(L/m'))$$

$$B(j, k) = \{B(x, y) \times (1-j/(n/m)) + B(x+1, y) \times (j/(n/m)\} \times (1-k/(L/m')) + \{B(x, y+1) \times (1-j/(n/m)) + B(x+1, y+1) \times (j/(n/m)\} \times (k/(L/m'))$$

wherein J and k are addresses in a block, and j = 0, 1, 2, ..., (n/m - 1 = 79), and k = 0, 1, 2, ..., (L/m' - 1 =63).

As mentioned above, the R-IN signal 16R, G-IN signal 16G and B-IN signal 16B are given to the R circuit 12R, G circuit 12G and B circuit 12B, respectively, from the computer connected to the projector. Also, the H-IN signal 17 is input to the H-PLL circuit 14 from the computer.

Reference is also made to Fig. 2 to focus attention on the R circuit 12R. The H-PLL circuit 14, equipped with a phase comparator 19, a control voltage generator circuit 20, a voltage-controlled oscillator 21 and a divider 22, generates, in synchronization with the H-IN signal 17, a clock pulse 46 for sampling the R-IN signal 16R (G-IN 16G and B-IN 16B) on a pixel basis and a H-periodical pulse 47. The clock pulse 46 and H-periodical pulse 47 are given to the pedestal-level-control voltage generator circuit 9R, gain-control voltage generator circuit 10R and address-generating circuit 15.

A scale-of-n/m counter 23H in block H and an x-address-in-block-H generator 24H operate responding to the output (H-periodical pulse) of the divider 22, and the scale-of-n/m counter 23H in block H generates address j in block H in a cycle of n/m, as vertical addresses (0, 1, 2, ..., n/m - 1) shown in Fig. 5. The x-address-in-block-H generator 24H generates, corresponding to the address j in block H, x addresses, as horizontal addresses (1, 2, 3, ..., m) shown in Fig. 4, and an address adder 25H generates address (x+1).

Likewise, a scale-of-L/m' counter 23V in block V generates, responding to the H-periodical pulse 47 and the V-IN signal 18, address k in block V in a cycle of L/m', as vertical addresses (0, 1, ..., (L/m' - 1)) shown in Fig. 5. A y-address-in-block-V generator 24V generates y addresses responding to the address k in block V and the V-IN signal 18, and the address (y+1) is generated by the address adder 25V.

These addresses x, (x + 1), y and (y+1) are given to the color-phase-irregularity correction data memory 11R via an address-modifying circuit 48 which performs a switching operation in reply to a projection mode-switching signal 49.

In the color-phase-irregularity correction data memory 11R, the addresses x, (x+1), y, (y+1) mentioned above are given to a PROM 26, A(x, y), A(x+1, y), A(x, y+1) and A(x+1, y+1) registers 27A-30A output contrast (gain) correction data A(x, y), A(x+1, y), A(x, y+1) and A(x+1, y+1) for the four measurement points, depending on the output of the PROM. Likewise, B(x, y), B(x+1, y), B(x, y+1) and B(x+1, y+1) registers 27B-30B output brightness (pedestal level) correction data B(x, y), B(x+1, y), B(x, y+1) and B(x+1, y+1) for the four measurement points. The contrast (gain) correction data is given to the gain-control voltage generator circuit 10R, and the brightness (pedestal level) correction data is given to the pedestal-level-control voltage generator circuit 9R.

Referring to Fig. 2, the gain-control voltage generator circuit 10R is equipped with multipliers 31-34, multipliers 39-40, a coefficient $(1 - jm/n)$ generator 35, a coefficient $(jm/n)$ generator 36, adders 37, 38 and 43, a coefficient $(1 - km'/L)$ generator 41, a coefficient $(km'/L)$ generator 42, a D/A converter (DAC) 44A and an LPF 50.

On the other hand, the pedestal-level-control voltage generator circuit 9R has the same circuit configuration as the gain-control voltage generator circuit 10R, as illustrated in Fig. 3 (for simplicity, like reference numerals as used for the components in Fig. 2 are used in Fig. 3, except the D/A converter (DAC) 44B).

By constructing the gain-control voltage generator circuit 10R and the pedestal-level-control voltage generator circuit 9R with weighting-coefficient generator circuits, multipliers and adders in this way, the color correction data for points other than measurement points are calculated by linear interpolation as described above.

The contrast (gain) correction coefficient data A (j, k) and the brightness (pedestal level) correction data B (j, k) calculated in the gain-control voltage generator circuit 10R and the pedestal-level-control voltage generator circuit 9R, respectively, are given to the gain-adjusting circuit 2 and the clamp-level control circuit 8 as an (analog) gain control voltage 45AR and an (analog) pedestal-level control voltage 45BR, via the D/A converters (DACs) 44A and 44B, and the LPF 50.

Although the foregoing description is focused on the R circuit, the respective color levels may be independently corrected through the G circuit and the B circuit in the same manner as through the R circuit to eliminate color phase irregularities on images displayed by synthesis and projection by providing the G circuit and the B circuit with gain-control voltage generator circuits, pedestal-level-control voltage generator circuits and color-phase-irregularity correction data memory in the same manner as the R circuit.

Although the foregoing description is focused on the color phase irregularities, the present invention allows correction of the brightness irregularities by concurrently changing the respective color levels of RGB, in addition to the correction of the color phase irregularities.

In addition, use of a PROM or the like which contains a programmed modification table as the address-modifying circuit 48 shown in Fig. 1 or Fig. 2 allows modification of the address for readout of the correction value in response to a switching signal 49 for reversing the projecting direction vertically or horizontally.

Although the foregoing description is made with reference to a liquid crystal projector, it is apparent from the description that the present invention may be effectively applied to correction of even color phase irregularities encountered when CRT-type projectors are used.

As described above, the present invention does not need means of designating color phase irregularities (cursor generator circuit) and means for storing a correction value in a frame memory, different from the prior art, and further has the effect of reducing the capacity of a PROM memory for (white or black) color correction data to (m+1) x (m'+1) x 3 (bits of the correction data: e.g., 8 bits) = 289 x 3 x (bits of the correction data: e.g., 8 bits), approximately one five-thousandth of 1,310,720 x 3 (bits of the correction data: e.g., 8 bits), the capacity of the frame memory required for readout of the total correction value for R, G and B according to the prior art.

Furthermore, the present invention allows reduction of the number of correction points (the number of measurement points) to (m+1) x (m'+1) = 289, even when the correction points (adjustment points) is required to be present all over the screen. Accordingly, the present invention has the effect of greatly decreasing the adjust processing time.

In addition, although only white balance correction data can be read out according to the prior art, the present invention, which allows readout of both contrast correction data A for white balance correction and brightness correction (pedestal level correction) data B for correction of black color phase irregularities (black balance), as color correction data, has the advantage that not only white balance, but also black balance may be corrected.

In addition, since an address-modifying circuit is provided, the present invention has the additional effect that no color phase irregularities are produced even when the direction of projection of light onto a screen is changed horizontally or vertically, or both horizontally and vertically at the same time.

## Claims

1. A projector for displaying an image on a screen through separation and synthesis of the primary colors of light, equipped with a corrector circuit for color phase irregularities and brightness irregularities, which comprises:

   address signal-producing means for producing an address signal corresponding to the correction point for a color phase irregularity on the screen for displaying said image;

   a memory which stores the correction value for said correction point, corresponding to said address signal;

   readout means for reading out the correction value stored in said memory, on the basis of said address signal; and

   correcting means for correcting the color phase irregularity through correction of the level of the picture signal, on the basis of said read correction value.

2. A projector for displaying an image on a screen through separation and synthesis of the primary colors of light, equipped with a corrector circuit for color phase irregularities and brightness irregularities, which comprises:

   address signal-producing means for producing an address signal corresponding to the correction point for a color phase irregularity on the screen for displaying said image;

   a memory which stores the correction value for said correction point, corresponding to said address signal;

   readout means for reading out the correction value stored in said memory, on the basis of said address signal;

   interpolating means for producing interpolation data from a plurality of correction values read out from said memory; and

   correcting means for correcting the color phase irregularity through correction of the level of the picture signal on the basis of the correction value read out from said memory and the interpolation value obtained from said interpolating means.

3. A projector equipped with a corrector circuit for color phase irregularities and brightness irregularities, as claimed in claim 1 or 2, which further comprises modifying means for producing a modified address signal by modifying the order of said address signals along the scanning direction for displaying said image, wherein said readout means reads out the correction value stored in said memory, depending on said modified address signal.

4. A projector equipped with a corrector circuit for color phase irregularities and brightness irregularities, as claimed in claim 1, 2 or 3, wherein said correcting means is designed so as to correct the pedestal level and the picture gain of said picture signal.

5. A projector equipped with a corrector circuit for color phase irregularities and brightness irregularities, as claimed in claim 2, 3 or 4, wherein said interpolation means is equipped with at least a weighting-factor generator, a multiplier, an adder and an LPF.

Fig. 1

EP 0 774 871 A2

Fig. 2

# Fig. 3

Pedestal Level Voltage Generating Circuit

Pedestal Level Control Voltage

EP 0 774 871 A2

Image Horizontal Direction x

|  | 1 | 2 | x | x+1 | m |
|---|---|---|---|---|---|
| 1 | A(1,1)<br>B(1,1) | A(2,1)<br>B(2,1) |  |  |  |
| 2 | A(1,2)<br>B(1,2) | A(2,2)<br>B(2,2) |  |  |  |
| y |  |  | A(x,y)<br>B(x,y) | A(x+1,y)<br>B(x+1,y) |  |
| y+1 |  |  | A(x,y+1)<br>B(x,y+1) | A(x+1,y+1)<br>B(x+1,y+1) |  |
| m' |  |  |  |  | A(m,m')<br>B(m,m') |

Image Vertical Direction

# Fig. 4

Fig. 5